# EUROPÄISCHE PATENTSCHRIFT

(11) **EP 1 181 333 B1**
(45) Veröffentlichungstag und Bekanntmachung des Hinweises auf die Patenterteilung: **15.09.2004**
(21) Anmeldenummer: 00927089.3
(22) Anmeldetag: 27.04.2000
(51) Int. Cl.: C08L 53/02

(54) **THERMOPLASTISCHE ELASTOMERZUSAMMENSETZUNG**
THERMOPLASTIC ELASTOMER COMPOSITION
COMPOSITION ELASTOMERE THERMOPLASTIQUE

(30) Priorität: 03.05.1999 DE 19920257
(43) Veröffentlichungstag der Anmeldung: 27.02.2002
(73) Patentinhaber: BASF AKTIENGESELLSCHAFT, 67056 Ludwigshafen (DE)
(72) Erfinder: KNOLL, Konrad, D-67069 Ludwigshafen (DE); REBIZAK, Richard, D-67063 Ludwigshafen (DE); ANDERLIK, Rainer, D-69126 Heidelberg (DE); PHILIPP, Sabine, D-64546 Mörfelden-Walldorf (DE); WÜNSCH, Josef, D-67105 Schifferstadt (DE)
(86) Internationale Anmeldenummer: PCT/EP2000/003815
(87) Internationale Veröffentlichungsnummer: WO 2000/066662

(56) Entgegenhaltungen:
- EP-A- 0 733 676
- EP-A- 0 733 677
- EP-A- 0 770 645
- WO-A-96/20248
- WO-A-96/23823
- WO-A-98/01506
- WO-A-99/46330
- GB-A- 2 250 295
- US-A- 4 772 657

## Beschreibung

Die Erfindung betrifft eine thermoplastische Elastomerzusammensetzung, enthaltend
a) 5 bis 99 Gew.-% eines Blockcopolymeren, das aus Hartblöcken S aus vinylaromatischen Monomeren und ein oder mehreren statistischen Weichblöcken B/S aus Dienen und vinylaromatischen Monomeren aufgebaut ist,
b) 1 bis 95 Gew.-% eines Plastifizierungsmittels mit einer höheren Polarität als Weißöl und einer geringeren Polarität als Dioctylphthalat,
c) 0 bis 50 Gew.-% eines Polyolefines und
d) 0 bis 60 Gew.-% Zusatzstoffe,
wobei die Summe aus a) bis d) 100 Gew.-% beträgt.

Weiterhin betrifft die Erfindung die Verwendung der Formmassen zur Herstellung von flexiblen und elastischen Formkörpern, sowie die daraus hergestellten Formkörper.

Thermoplastischen Elastomerenzusammensetzung auf Basis von hydrierten oder unhydrierten Styrol-Butadien oder Styrol-Isopren Blockcopolymeren (S-TPE) und gegebenenfalls Polyolefinen sind bekannt (z.B.: EP-A 0 583 228, EP-A 0 623 651, EP A 0 712 892 oder EP-A 0 845 498). Durch die Wahl der Hilfsstoffe und die Mischungsverhältnisse lassen sich die Materialeigenschaften wie Elastizität, Härte, Zugfestigkeit oder Haftung in weiten Bereichen einstellen. Als Weichmacher werden üblicherweise aromatenarme paraffinische Öle, naphthenische Öle oder oligomere Polybutadiene eingesetzt.

Thermoplastische Elastomere oder Elastomerzusammensetzugen auf Basis von Blockcopolymeren aus Styrol und Butadien mit einem oder mehreren statistischen Weichblöcken B/S sind aus WO 95/35335 und WO 96/20248 bekannt. Sie weisen gegenüber thermoplastischen Elastomeren mit einer Weichphase aus einem reinen Butadienblock eine bessere Verarbeitbarkeit, bessere Witterungsbeständigkeit bessere thermische Schmelzestabilität sowie eine bessere Bedruckbarkeit und Bemalbarkeit z.B. mit Lacken auf.

Aufgrund der höheren Polarität der Weichblöcke B/S sind diese Blockcopolymeren nur begrenzt mit Weißöl verträglich, die üblicherweise als Plastifizierungsmittel für klassische S-TPE's eingesetzt werden.

Aufgabe der vorliegenden Erfindung war es, eine thermoplastische Elastomerzusammensetzung bereitzustellen, die die vorgenannten Nachteile nicht aufweist und die insbesondere bei Verwendung von Blockcopolymeren mit statistischen Weichblöcken B/S in jeder gewünschten Härte ohne Auschwitzen des Plastifizierungsmittels einstellbar ist.

Demgemäß wurde die oben beschriebene thermoplastische Elastomerzusammensetzung gefunden.

Die thermoplastische Elastomerzusammensetzung enthält 5 bis 99 Gew.-%, bevorzugt 49 bis 94 Gew.-% eines Blockcopolymeren, das aus Hartblöcken S aus vinylaromatischen Monomeren und ein oder mehreren statistischen Weichblöcken B/S aus Dienen und vinylaromatischen Monomeren aufgebaut ist.

Geeignete vinylaromatische Monomere sowohl für die Hartblöcke S als auch für die statistischen Weichblöcke B/S sind Styrol, α-Styrol, Vinyltoluol oder Mischungen davon.

Als Diene können Butadien, Isopren, Piperylen, 1-Phenylbutadien oder Mischungen davon verwendet werden.

Besonders bevorzugt werden Blockcopolymere aus Styrol und Butadien.

Die Herstellung und Eigenschaften solcher Blockcopolymeren sind beispielsweise in WO 95/35335 oder WO 97/40079 beschrieben. Sie sind durch anionische Polymerisation in einem unpolaren Lösungsmittel unter Zusatz eines polaren Cosolvents oder eines Kaliumsalzes erhältlich.

Für die Eignung der Blockcopolymeren als thermoplastische Elastomere ist die Morphologie wichtig, die sich durch die Unverträglichkeit der Blöcke S und B/S einstellt. Die Blöcke B/S aggregieren in der Weichphase, welche die kontinuierliche Matrix bildet und für das gummielastische Verhalten bei Gebrauchstemperatur verantwortlich sind. Die Blöcke S liegen vorwiegend in Form isolierter, meist kugelförmiger Einschlüsse vor, die als physikalische Vernetzungspunkte wirken.

Besonders geeignet als thermoplastische Elastomere sind symmetrische Dreiblockcopolymere oder Sternblockcopolymere mit außenliegenden Blöcken S und ein oder mehreren dazwischenliegenden Blöcken B/S.

Das Blockcopolymere weist bevorzugt einen Diengehalt von weniger als 50 Gew.-%, bevorzugt von 15 bis 50 Gew.-%, besonders bevorzugt von 25 bis 40 Gew.-% auf, bezogen auf das gesamte Blockcopolymere.

Der Anteil der aus den Blöcken B/S gebildeten Weichphase beträgt in der Regel mindestens 60 Gew.-%, bevorzugt 60 bis 80 Gew.-%, besonders bevorzugt 65 bis 75 Gew.-%, bezogen auf das gesamte Blockcopolymere. Die aus den vinylaromatischen Monomeren gebildeten Blöcke S bilden die Hartphase, deren Gewichtsanteil maximal 40 Gew.%, bevorzugt 20 bis 40 Gew.-%, besonders bevorzugt 25 bis 35 Gew.-% ausmacht.

Durch den statistischen Aufbau der Weichblöcke B/S beträgt die Glasübergangstemperatur in der Regel -50 bis + 25°C, bevorzugt -50 bis + 5°C, besonders bevorzugt -50 bis -15°C. Die Glastemperatur des Hartblockes S liegt bevorzugt über 25°C, besonders bevorzugt über 50°C.

Vorzugsweise besteht der Weichblock B/S aus 30 bis 75 Gew.-%, besonders bevorzugt 30 bis 65 Gew.-% an vinylaromatischem Monomer und 25 bis 70 Gew.-% Dien, besonders bevorzugt 35 bis 70 Gew.-%. Der Weichblock B/S kann in mehrere statistische Unterblöcke mit unterschiedlichen Molekulargewichten oder unterschiedlichen Monomerzusammensetzungen unterteilt sein.

Das Molekulargewicht des Weichblockes B/S beträgt üblicherweise von 2.000 bis 250.000, bevorzugt von 20.000 bis 150.000, besonders bevorzugt 60.000 bis 120.000 [g/mol].

Das Molekulargewicht eines Blockes S beträgt in der Regel 1.000 bis 200.000, bevorzugt 5.000 bis 50.000, besonders bevorzugt 15.000 bis 25.000 [g/mol]. Das Blockcopolymere kann aus Blöcken S mit gleichen oder unterschiedlichen Molekulargewichten aufgebaut sein.

Gewöhnlich werden die Blockcopolymeren mit Stabilisatoren versetzt. Als Stabilisatoren eigenen sich beispielsweise sterisch gehinderte Phenole wie Irganox® 1076 oder Irganox® 3052 der Firma Ciba-Geigy, Basel oder α-Tocopherol (Vitamin E).

Die thermoplastische Elastomerzusammensetzung enthält ferner 1 bis 95 Gew.-%, bevorzugt 4 bis 49 Gew.-% eines Plastifizierungsmittels mit einer höheren Polarität als Weißöl und einer geringeren Polarität als Diisooctylphthalat. Besonders 5 bevorzugt werden Plastifizierungsmittel verwendet, die nur geringfügig polarer als Weißöl sind. Geeignete Plastifizierungsmittel sind beispielsweise Substanzen, die polare Gruppen wie Ester, Amide, Ether sowie einem aliphatischen Rest mit 12 bis 18 Kohlenstoffatomen aufweisen. Beispiele hierfür sind natürliche oder synthetische Fettsäureester, Fettsäureamide oder Fettalkoholester. Bevorzugte Fettalkoholester sind die der Zitronensäure, Adipinsäure oder anderer Di- oder Oligocarbonsäuren. Die genannten Plastifizierungsmittel können einzeln oder in Mischungen verwendet werden. Es können auch Mischungen mit paraffinischen oder naphthenischen Ölen verwendet werden. Die besten mechanischen Eigenschaften werden erhalten, wen man eine Mischung eines Plastifizierungsmittels mit Weißöl verwendet, wobei das Weißöl in einer Menge zugesetzt wird, bei der gerade keine Entmischung mit dem Blockcopolymeren eintritt.

Bevorzugt werden als Plastifizierungsmittel Pflanzenöle, wie Sonnenblumenöl, oder eine Mischung aus Pflanzenölen und Weißöl verwendet.

Über die Menge des Plastifizierungsmittels können Härte und Fließfähigkeit der thermoplastischen Elastomerenzusammensetzung in weiten Bereichen eingestellt werden.

Die thermoplastische Elastomerzusammensetzung kann 0 bis 50 Gew.-%, bevorzugt 1 bis 30 Gew.-% Polyolefine, wie Polyethylen, Polypropylen, Polybutylen, Polyisobutylen, Ethylen-Propylen-Kautschuke, sowie EPDM-Kautschuke enthalten. Bevorzugt werden Metallocenpolyethylen mit enger Molekulargewichtsverteilung und Polyolefine mit hoher Kristallitschmelztemperatur wie Polypropylen verwendet. Durch weiche Polyolefine kann die Medienbeständigkeit, beispielsweise gegenüber Ölen und Lösungsmittel, sowie die Weiterreißfestigkeit der Elastomerzusammensetzung verbessert werden, durch kristalline Polyolefine die Wärmeformbeständigkeit und der Druckverformungsrest.

Als weitere Komponenten kann die Elastomerzusammensetzung Zusatzstoffe aller Art, üblicherweise in Mengen im Bereich von 0 bis 60 Gew.-%, bevorzugt 1 bis 40 Gew.-%, bezogen auf die Elastomerzusammensetzung, enthalten. Als Zusatzstoffe kommen z.B. faserund pulverförmige Füll- und Verstärkungsstoffe, Stabilisatoren, Flammschutzmittel, Pigmente, Farbstoffe, Verarbeitungshilfsmittel, wie Gleit- und Entformungsmittel in Frage. Bevorzugt werden anorganische Füllstoffe, wie Talkum, Karbonate, Sulfate, mehr oder weniger hydratisierte Oxyde, insbesondere Titandioxid, Ca- und Mg-silikate, Silikate wie Aerosil, Kieselgel oder Kieselgur, oder Ruß verwendet. Weitgehend transparente Mischungen sind durch den Zusatz sogenannter Nanocomposits zugänglich. Dies sind Schichtsilikate wie Montmorillonit, die bevorzugt mit Hydrophobiermitteln wie Aminen oder Salzen mit quarternisierten Aminen imprägniert wurden.

Die erfindungsgemäßen Formmassen können durch Mischen und Homogenisieren der Komponenten nach den in der Kunststofftechnologie üblichen Methoden erhalten werden, wobei die Reihenfolge der Zugabe der Komponenten variieren kann. Geeignete Mischvorrichtungen sind beispielsweise kontinuierliche oder diskontinuierliche Kneter, Banbury-Mischer oder gleichsinnig oder gegensinnig drehende Ein- oder Zweischneckenextruder.

Die erfindungsgemäße Elastomerzusammensetzung ist elastisch, thermoplastisch verarbeitbar und durch Wiederaufschmelzen leicht recyclierbar. Wegen der hervorragenden Verarbeitbarkeit und verträglichkeit mit Thermoplasten auf Styrolbasis, wie glasklares Polystyrol (GPPS), schlagfestes Polystyrol (HIPS), Styrol-Butadien-Blockcopolymeren wie Styrolux® der BASF Aktiengesellschaft oder K-Resin® (Phillips), Styrol-Acrylnitril-Polymeren (SAN), Acrylnitril-Butadien-Styrol-Polymeren (ABS) oder Polyphenylenether bietet sich die erfindungsgemäße Elastomerzusammensetzung im Zweikomponenten-(2K)-Spritzguß an. Die Grenzfläche zwischen der Hartkomponenten und der erfindungsgemäßen Elastomerzusammensetzung als Weichkomponente ist außerdem transparent. Mit dem 2K-Spritzguß lassen sich so flexible und starre Teile in einem Guß herstellen. Als Hartkomponente kommen ferner Polyester und Polycarbonat in Frage.

Die erfindungsgemäßen Elastomerzusammensetzung läßt sich auch ohne Koronabehandlung gut bemalen und bedrucken. Sie eignet sich daher zur Herstellung von elastischen und flexiblen Formteilen, wie Spielzeuge, Spielzeugteile, "Soft-Touch"-Anwendungen, wie Griffe oder Antirutschausrüstungen, Dichtungen, Schalter, Gehäuse mit Dichtlippen, Bedienknöpfe, Flexodruckplatten, Schuhsohlen, Schläuche, Profile, medizinische Artikel wie Infusionsbestecke, Dialyseeinheiten und Atemmasken, Hygieneartikel wie Zahnbürsten, Kabel-Isolier- und Mantelmassen, Schallschutzelemente, Faltenbälge, Walzen oder Walzenummantelungen, und Teppichrücken.

### Beispiele

Die Herstellung eines symmetrischen S-B/S-S -Dreiblockcopolymeren erfolgte analog den Beispielen aus WO 97/40079, wobei jedoch 5 jeweils 1638 g Styrol für die endständigen Blöcke S und eine Mischung aus 3750 g Styrol und 3378 g Butadien für den statistischen Weichblock B/S verwendet wurde. Die Polymerisation wurde mit 87,3 mmol s-Butyllithium in Gegenwart von 2,36 mmol Kalium-3,7-dimethyl-3-oktanoat initiiert. Das Blockcopolymere besaß ein mittels GPC gegen Polystyrolstandard ermitteltes zahlenmittleres Molekuargewicht Mₙ von 136.000 g/mol und ein gewichtsmittleres Molekulargewicht M_{w} von 163.000 g/mol.

Das symmetrische S-B/S-S - Dreiblockcopolymer kann bis zu 10 Gew.-% Weißöl aufnehmen. Durch Zusatz von Sonnenblumenöl kann der Gesamtölgehalt bis über 50 Gew.-% gesteigert werden. Tabelle 1 gibt die Stabilitätsgrenze wieder.

**Tabelle 1:**

| Stabilitätsgrenze des Weißölanteils bei unterschiedlichem Gesamtölanteil in der thermoplastischen Elastomerzusammensetzung | | | | | |
|---|---|---|---|---|---|
| Gesamtölgehalt [Gew.-%], bezogen auf die Elastomerzusammensetzung | 10 | 20 | 30 | 40 | 50 |
| Stabilitätsgrenze bei Weißölanteil [%] | 100 | 62 | 42 | 39 | 32 |

Das Blockcopolymere wurde auf einem Zweischneckenextruder ZSK 25/2 bei 180°C mit einer vorgemischten Weißöl/Sonnenblumenöl-Mischung (40/60) vermischt. Gesamtölanteil und Eigenschaften der so erhaltenen thermoplastischen Elastomerzusammensetzung sind in Tabelle 2 zusammengestellt.

Die DSC-Messungen belegen, daß die Weichphase selektiv durch die Ölmischung plastifiziert wird. Die Glasübergangstemperatur der Weichphase Tg (weich) wird von ca. -40°C bis fast -80°C abgesenkt, während die Glasübergangstemperatur der Hartphase Tg (hart) praktisch unbeeinflußt bei ca 60°C liegt.

Die Shore-A-Härte nimmt praktisch linear mit steigendem Ölgehalt ab. Selbst bei einer Shore-A-Härte im Bereich von 10 liegen die mechanischen Werte noch auf einem akzeptablen Niveau. Die Reißdehnung erreicht bei 40 Gew.-% Gesamtölgehalt ein Maximum von 1200 %.

**Tabelle 2:**

| Eigenschaften der thermoplastischen Elastomerzusammensetzung in Abhängigkeit vom Gesamtölgehalt einer Weißöl/Sonnenblumenöl-Mischung (40/60) | | | | | | | |
|---|---|---|---|---|---|---|---|
| Gesamtölgehalt [Gew.-%] | 0 | 5 | 10 | 20 | 30 | 40 | 50 |
| Glasübergangstemperatur der Weichphase Tg [°C] | -38 | -43 | -48 | -60 | -65 | -72 | -78 |
| Shore-Härte A | 82 | 68 | 63 | 47 | 30 | 16 | 11 |
| Reißfestigkeit [N/mm2] | 27 | 24 | 23 | 19 | 12 | 5 | 3 |
| Reißdehnung [%] | 600 | 700 | 800 | 980 | 1150 | 1200 | 1100 |

Durch den Ölzusatz läßt sich die Schmelzfließfähigkeit MFI wesentlich verbessern (Tabelle 3). Somit gelingt es auch Fließfähigkeiten einzustellen, die den Spritzguß bei niedrigen Temperaturen und kurzen Entformungszeiten erlauben.

**Tabelle 3:**

| Schmelzfließfähigkeit. MFI [5 kp, 10 min⁻¹] von Elastomerzusammensetzungen in Abhängigkeit vom Gesamtölgehalt (Weißöl/Sonnenblumenöl 30/70) und der Temperatur | | | | | | | |
|---|---|---|---|---|---|---|---|
| | Gesamtölgehalt [Gew.-%] | | | | | | |
| | 0 | 5 | 10 | 20 | 30 | 40 | 50 |
| 100°C | | | | | 2,4 4 | 9,5 | 30 |
| 110°C | | | | 1,4 | 6,0 | 21,6 | 79 |
| 120°C | | | | 3,3 | 10,0 | 43,0 | |
| 130°C | | | 1,6 | 6,0 | 20,1 | 87,8 | |
| 140°C | | | 3,7 | 11,6 | 36,3 | 136 | |
| 150°C | | 3,5 | 6,9 | 18,4 | 59,3 | | |
| 160°C | 2,9 | 6,3 | 11,3 | 31,5 | 99,6 | | |
| 170°C | 5,2 | 9,7 | 18,9 | 44,0 | | | |
| 180°C | 9,0 | 16,9 | 27,8 | 68,7 | | | |

## Patentansprüche

1. Thermoplastische Elastomerzusammensetzung, enthaltend
a) 5 bis 99 Gew.-% eines Blockcopolymeren, das aus Hartblöcken S aus vinylaromatischen Monomeren und ein oder mehreren statistischen Weichblöcken B/S aus Dienen und vinylaromatischen Monomeren aufgebaut ist,
b) 1 bis 95 Gew.-% eines Plastifizierungsmittels mit einer höheren Polarität als Weißöl und einer geringeren Polarität als Diisooctylphthalat,
c) 0 bis 50 Gew.-% eines Polyolefines und
d) 0 bis 60 Gew.-% Zusatzstoffe,
wobei die Summe aus a) bis d) 100 Gew.-% beträgt.

2. Thermoplastische Elastomerzusammensetzung nach Anspruch 1, **dadurch gekennzeichnet, daß** sie
a) 49 bis 94 Gew.-% des Blockcopolymeren,
b) 4 bis 49 Gew.-% des Plastifizierungsmittels,
c) 1 bis 30 Gew.-% des Polyolefins und
d) 1 bis 40 Gew.-% an Zusatzstoffen
enthält.

3. Thermoplastische Elastomerzusammensetzung nach Anspruch 1 oder 2, **dadurch gekennzeichnet, daß** sie als Blockcopolymer ein symmetrisches Dreiblockcopolymer oder ein Sternblockcopolymer mit außenliegenden Blöcken S und ein oder mehreren dazwischenliegenden Blöcken B/S enthält.

4. Thermoplastische Elastomerzusammensetzung nach einem der Ansprüche 1 bis 3, dadurch gekennzeichnt, daß das Blockcopolymere einen Diengehalt von weniger als 50 Gew.-% und einen Anteil der aus den Blöcken B/S gebildeten Weichphase von mindestens 60 Gew.-%, jeweils bezogen auf das gesamte Blockcopolymere, aufweist.

5. Thermoplastische Elastomerzusammensetzung nach einem der Ansprüche 1 bis 4, **dadurch gekennzeichnet, daß** sie als Plastifizierungsmittel eine Substanz, die eine Ester-, Amidoder Ethergruppe und einen aliphatische Rest mit 12 bis 18 Kohlenstoffatomen aufweist, oder Mischungen davon mit paraffinischen oder naphthenischen Ölen enthält.

6. Thermoplastische Elastomerzusammensetzung nach einem der Ansprüche 1 bis 5, **dadurch gekennzeichnet, daß** sie als Plastifizierungsmittel einen Fettsäureester, Fettsäureamid oder Fettalkoholester oder Mischungen davon mit paraffinischen oder naphthenischen Ölen enthält.

7. Thermoplastische Elastomerzusammensetzung nach einem der Ansprüche 1 bis 6, **dadurch gekennzeichnet, daß** sie als Plastifizierungsmittel Pflanzenöl oder eine Mischung aus Pflanzenöl und Weißöl enthält.

8. Thermoplastische Elastomerzusammensetzung nach einem der Ansprüche 1 bis 7, **dadurch gekennzeichnet, daß** sie als Polyolefin Polyethylen, Polypropylen, Polybutylen oder Polyisobutylen enthält.

9. Verfahren zur Herstellung von elastischen und flexiblen Formteilen, **dadurch gekennzeichnet, daß** man eine thermoplastische Elastomerzusammensetzung gemäß einem der Ansprüche 1 bis 8 verwendet.

10. Verfahren zur Herstellung von Formteilen mit steifen und flexiblen Bereichen, **dadurch gekennzeichnet, daß** man eine thermoplastische Elastomerzusammensetzung gemäß einer der Ansprüche 1 bis 9 als flexible Komponente und ein schlagzäh modifiziertes oder nicht modifiziertes Styrolhomo- oder copolymer, einen Polyester oder Polycarbonat als steife Komponente im Zweikomponentenspritzguß einsetzt.

11. Formteile mit steifen und flexiblen Bereichen, erhältlich nach dem Verfahren gemäß Anspruch 10.

12. Elastische und flexible Formteile, erhältlich nach dem Verfahren gemäß Anspruch 9.

13. Spielzeug, Spielzeugteile, Griffe, Bedienungsknöpfe, Antirutschausrüstung, Dichtungen, Schalter, Gehäuse mit Dichtlippen, Flexodruckplatten, Schuhsohlen, Schläuche, Profile, medizinische Artikel wie Infusionsbestecke, Atemmasken und Dialyseeinheiten, Elektrogerätegehäuse, Sanitärartikel, Zahnbürsten, Kabel-Isolier- und Mantelmassen, Schallschutzelement, Faltenbälge, Walzen, Rollen oder Teppichrücken erhältlich nach dem Verfahren gemäß einem der Ansprüche 9 oder 10.

## Claims

1. A thermoplastic elastomer composition, comprising
a) from 5 to 99% by weight of a block copolymer which is composed of hard blocks S made from vinylaromatic monomers and of one or more random soft blocks B/S made from dienes and from vinylaromatic monomers,
b) from 1 to 95% by weight of a plasticizer with a higher polarity than white oil and with a lower polarity than diisooctyl phthalate,
c) from 0 to 50% by weight of a polyolefin, and
d) from 0 to 60% by weight of additives,
where the total of a) to d) is 100% by weight.

2. A thermoplastic elastomer composition as claimed in claim 1, which comprises
a) from 49 to 94% by weight of the block copolymer,
b) from 4 to 49% by weight of the plasticizer,
c) from 1 to 30% by weight of the polyolefin, and
d) from 1 to 40% by weight of additives.

3. A thermoplastic elastomer composition as claimed in claim 1 or 2, in which the block copolymer comprises a symmetrical three-block copolymer or a star-block copolymer with outer blocks S and with one or more blocks B/S lying therebetween.

4. A thermoplastic elastomer composition as claimed in any one of claims 1 to 3, wherein the block copolymer has a diene content of less than 50% by weight and has a proportion of at least 60% by weight of the soft phase formed from the blocks B/S, based in each case on the entire block copolymer.

5. A thermoplastic elastomer composition as claimed in any of claims 1 to 4, which comprises, as plasticizer, a substance which contains an ester group, amide group, or ether group, and which contains an aliphatic radical having from 12 to 18 carbon atoms, or comprises a mixture of these with paraffinic or naphthenic oils.

6. A thermoplastic elastomer composition as claimed in any one of claims 1 to 5, in which the plasticizer comprises an ester of a fatty acid, an amide of a fatty acid, or an ester of a fatty alcohol, or mixtures of these with paraffinic or naphthenic oils.

7. A thermoplastic elastomer composition as claimed in any one of claims 1 to 6, in which the plasticizer comprises vegetable oil or a mixture of vegetable oil and white oil.

8. A thermoplastic elastomer composition as claimed in any one of claims 1 to 7, in which the polyolefin comprises polyethylene, polypropylene, polybutylene or polyisobutylene.

9. A process for preparing elastic and flexible moldings, which comprises using a thermoplastic elastomer composition as claimed in any one of claims 1 to 8.

10. A process for producing moldings with rigid and flexible regions, which comprises using a thermoplastic elastomer composition as claimed in any one of claims 1 to 9 as flexible component and an impact-modified or unmodified styrene homo- or copolymer, a polyester, or polycarbonate, as rigid component, in two-component injection molding.

11. A molding with rigid and flexible regions, obtainable by the process as claimed in claim 10.

12. An elastic or flexible molding, obtainable by the process as claimed in claim 9.

13. A toy, a part of a toy, a grip, a control knob, an antislip surface, a gasket, a switch, a housing with sealing lips, a flexographic printing plate, a shoe sole, a hose, a profile, a medical item, such as an infusion kit, a breathing mask or a dialysis unit, a housing for an electrical device, a sanitary item, a toothbrush, an insulating or sheathing material for a cable, a sound-deadening element, a folding bellows, a roll, a roller or a carpet backing, obtainable by the process as claimed in claim 9 or 10.

## Revendications

1. Composition élastomère thermoplastique, contenant
a) de 5 à 99% en poids d'un copolymère bloc, constitué de blocs durs S de monomères vinylaromatiques et d'un ou plusieurs blocs mous statistiques B/S constitués de diènes et de monomères vinylaromatiques,
b) de 1 à 95% en poids d'un agent plastifiant à plus haute polarité que l'huile blanche et à plus basse polarité que le phtalate de diisooctyle,
c) de 0 à 50% en poids d'une polyoléfine et
d) de 0 à 60% en poids d'additifs,
la somme de a) à d) totalisant 100% en poids.

2. Composition élastomère thermoplastique selon la revendication 1, **caractérisée en ce qu'**elle contient
a) de 49 à 94% en poids du copolymère bloc,
b) de 4 à 49% en poids de l'agent plastifiant,
c) de 1 à 30% en poids de la polyoléfine et
d) de 1 à 40% en poids d'additifs.

3. Composition élastomère thermoplastique selon la revendication 1 ou 2, **caractérisée en ce qu'**elle contient en tant que copolymère bloc un copolymère tribloc symétrique ou un copolymère en étoile ayant des blocs extérieurs S et un ou plusieurs blocs B/S intercalés entre eux.

4. Composition élastomère thermoplastique selon l'une quelconque des revendications 1 à 3, **caractérisée en ce que** le copolymère bloc présente une teneur en diène de moins de 50% en poids et une fraction de la phase molle constituée des blocs B/S d'au moins 60% en poids, à chaque fois par rapport à l'ensemble du copolymère bloc.

5. Composition élastomère thermoplastique selon l'une quelconque des revendications 1 à 4, **caractérisée en ce qu'**elle contient en tant qu'agent plastifiant une substance qui présente un groupe ester, amide ou éther et un reste aliphatique comportant de 12 à 18 atomes de carbone, ou leurs mélanges avec des huiles paraffiniques ou naphténiques.

6. Composition élastomère thermoplastique selon l'une quelconque des revendications 1 à 5, **caractérisée en ce qu'**elle contient en tant qu'agent plastifiant un ester d'acide gras, un amide d'acide gras ou un ester d'alcool gras, ou leurs mélanges avec des huiles paraffiniques ou naphténiques.

7. Composition élastomère thermoplastique selon l'une quelconque des revendications 1 à 6, **caractérisée en ce qu'**elle contient en tant qu'agent plastifiant une huile végétale ou un mélange d'huile végétale et d'huile blanche.

8. Composition élastomère thermoplastique selon l'une quelconque des revendications 1 à 7, **caractérisée en ce qu'**elle contient en tant que polyoléfine du polyéthylène, du polypropylène, du polybutylène ou du polyisobutylène.

9. Procédé de préparation de pièces moulées élastiques et flexibles, **caractérisé en ce que** l'on utilise une composition élastomère thermoplastique selon l'une quelconque des revendications 1 à 8.

10. Procédé de préparation de pièces moulées comportant des zones rigides et des zones flexibles, **caractérisé en ce que** l'on met en oeuvre une composition élastomère thermoplastique selon l'une quelconque des revendications 1 à 8 en tant que composant flexible et un homo- ou un copolymère de styrène modifié ou non modifié quant à la résistance au choc, un polyester ou un polycarbonate en tant que composant rigide dans la pièce à deux composants moulée par injection.

11. Pièces moulées comportant des zones rigides et des zones flexibles, que l'on peut obtenir par le procédé selon la revendication 10.

12. Pièces moulées élastiques et flexibles, que l'on peut obtenir par le procédé selon la revendication 9.

13. Jouets, pièces de jouets, poignées, boutons de commande, équipements antidérapants, joints, commutateurs, boîtiers à lèvres d'étanchéités, plaques flexographiques, semelles de souliers, flexibles, profilés, articles médicaux tels que des trousses à perfusion, des masques respiratoires et des unités de dialyse, boîtiers d'appareils électriques, articles sanitaires, brosses à dents, masses pour isolation de câbles et gainage, éléments d'isolation acoustique, soufflets, rouleaux, galets ou dossiers de tapis, que l'on peut obtenir par le procédé selon l'une quelconque de revendications 9 ou 10.
